# EUROPÄISCHE PATENTSCHRIFT

(11) **EP 1 232 922 B1**
(45) Veröffentlichungstag und Bekanntmachung des Hinweises auf die Patenterteilung: **16.04.2008**
(21) Anmeldenummer: 02003346.0
(22) Anmeldetag: 13.02.2002
(51) Int. Cl.: B60S 1/38

(54) **Wischblatt für Scheiben von Fahrzeugen**
Wiper blade for vehicle panes
Balai d'essuie-glace pour vitres de véhicule

(30) Priorität: 14.02.2001 DE 10106874
(43) Veröffentlichungstag der Anmeldung: 21.08.2002
(73) Patentinhaber: Volkswagen Aktiengesellschaft, 38436 Wolfsburg (DE)
(72) Erfinder: Holländer, Jan, 38104 Braunschweig (DE)
(74) Vertreter: Rabe, Andreas

(56) Entgegenhaltungen:
- WO-A-00/48876
- DE-A- 19 801 058
- US-A- 3 881 214
- US-A- 3 995 347

## Beschreibung

Die vorliegende Erfindung betrifft ein Wischblatt für Scheiben von Fahrzeugen mit einer langgestreckten Wischleiste, die eine an die Scheibe anlegbare Wischlippe aufweist, einer Federschiene und einem Luftleitprofil, das eine schaufelförmige Anströmkehle aufweist.

Ein derartiges Wischblatt ist aus der WO 00/34090 bekannt. Bei dem dort beschriebenen Wischblatt ist eine sog. Windabweisleiste einstückig über einen Steg mit der Wischleiste verbunden. Ferner weist das Wischblatt eine Federschiene auf, die von zwei beabstandeten Längsschienen gebildet wird. Zwischen den beiden Längsschienen durchgreift ein Steg, der die Windabweisleiste mit der Wischleiste verbindet, die Federschiene. Dabei liegen die beiden Längsschienen der Federleiste jeweils in einer Nut des Kopfteils der Wischleiste. Damit die Längsschienen nicht quer zu ihrer Längserstreckung aus den Nuten herauswandern können, sind diese durch mehrere Halter gesichert, die den Kopfteil der Wischleiste und die Längsschienen umgreifen. An den Positionen, an denen die Halter angeordnet sind, weist die Wischleiste, zu der auch die Windabweisleiste gehört, Aussparungen auf. Die Halter weisen eine ähnliche Form wie die Windabweisleiste auf.

Nachteilhaft an dem in der WO 00/34090 beschriebenen Wischblatt ist, daß es sich aus vielen Einzelteilen zusammensetzt. Hierdurch wird die Montage des Wischblatts aufwendig. Insbesondere müssen spezielle Halter hergestellt und montiert werden, um die Längsschienen der Federschiene in der Nut der Wischleiste zu halten. Außerdem kann die Wischlippe nachdem sie abgenutzt ist, nicht getrennt von der Windabweisleiste ausgetauscht werden, da diese beiden Teile einstückig ausgeführt sind.

Außerdem ist aus der WO 99/12784 ein Wischblatt der eingangs genannten Art bekannt. Auch bei diesem Wischblatt ist die Windabweisleiste einstückig mit der Wischleiste ausgebildet. Ferner wird die mehrteilige Federschiene durch Haltekrallen in einer Nut der Wischleiste gehalten. Der die Windabweisleiste und die Wischleiste verbindende Steg durchgreift dabei die Federschiene. Das Wischblatt gemäß der WO 99/12784 weist die gleichen vorstehend angegebenen Nachteile des in der WO 00/34090 beschriebenen Wischblattes auf.

Aus der DE 234 48 76 ist ein Wischblatt mit einer Wischleiste und einer auf der Oberseite der Wischleiste angeordneten Federschiene bekannt. Die Federschiene und die Wischleiste werden von einem Halter zusammengehalten, der die Federschiene und einen Teil der Wischleiste umgreift. Nachteilhaft an diesem Wischblatt ist, daß es kein wirkungsvolles Luftleitprofil aufweist, das ein Abheben des Wischblatts bei höheren Geschwindigkeiten des Fahrzeugs verhindert. Insbesondere weist das Wischblatt kein Luftleitprofil mit einer schaufelförmigen Anströmkehle auf.

Es ist die Aufgabe der vorliegenden Erfindung ein Wischblatt der eingangs genannten Art bereitzustellen, das kostengünstig hergestellt und einfach montiert werden kann.

Diese Aufgabe wird erfindungsgemäß durch ein Wischblatt mit den Merkmalen des Anspruchs 1 gelöst, wobei sich vorteilhafte Ausgestaltungen aus den Unteransprüchen ergeben.

Bei dem erfindungsgemäßen Wischblatt Umschließt das Luftleitprofil die Federschiene und einen von der Wischlippe abgewandten Kopfteil der Wischleiste, und das Luftleitprofil erstreckt sich im wesentlichen über die Länge der Wischleiste . Vorteilhaft an dem erfindungsgemäßen Wischblatt ist, daß die Federschiene und die Wischleiste von dem Luftleitprofil zusammengehalten werden. Es ist somit nicht erforderlich, daß separate Halter vorgesehen sind. Hierdurch kann das erfindungsgemäße Wischblatt besonders kostengünstig hergestellt und montiert werden.

Gemäß der Erfindung ist die Federschiene von dem Luftleitprofil auf einer von der Wischlippe abgewandten Fläche der Wischleiste gehalten. Die Federschiene kann dabei einteilig ausgebildet sein. Vorteilhaft an dieser Ausgestaltung ist, daß es bei einer einteiligen Federleiste nicht erforderlich ist, separate Mittel zum Zusammenhalten der verschiedenen Teile einer Federschiene vorzusehen.

Vorteilhafterweise weist das Kopfteil der Wischleiste eine Nut auf, in die das Luftleitprofil eingreift. Ferner hält das Luftleitprofil die Federleiste und die Wischleiste lösbar. Durch diese Ausgestaltung wird ein besonders sicherer Zusammenhalt der drei Teile des erfindungsgemäßen Wischblatts erreicht. Gleichzeitig kann die Wischleiste mit der Wischlippe unabhängig von der Federschiene und dem Luftleitprofil ausgetauscht werden.

Vorteilhafterweise ist die Federschiene zumindest abschnittsweise breiter als die Wischleiste. Ferner weist vorteilhafterweise das Luftleitprofil im Querschnitt eine T-Nut auf, in der die Federschiene und das Kopfteil der Wischlippe aufgenommen sind. An diese Nut, in von der Wischlippe wegweisender Richtung anschließend, ist bei dem Luftleitprofil ein dreieckförmiger Abschnitt ausgebildet, wobei die Hypotenuse dieses Abschnitts als Anströmkehle ausgebildet ist.

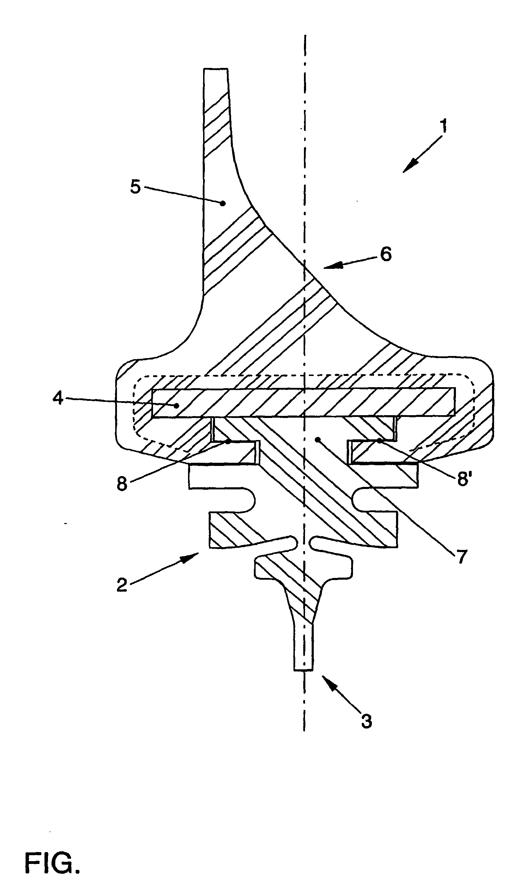

Die vorliegende Erfindung wird nun anhand eines Ausführungsbeispiels mit Bezug zu der beigefügten Zeichnung erläutert.

Die Figur zeigt einen Querschnitt durch das erfindungsgemäße Wischblatt 1.

Das Wischblatt 1 setzt sich aus einem Luftleitprofil 5, einer Federschiene 4 sowie einer Wischleiste 2 zusammen. Die Wischleiste 2 weist eine Wischlippe 3 auf, die im Betriebszustand des Wischblatts an der Scheibe des Fahrzeugs anliegt. Die Wischleiste 2 wird über ihr Kopfteil 7 mit den anderen Elementen des Wischblatts 1 verbunden. Hierfür weist der Kopfteil 7 eine Nut 8 auf, in die das Luftleitprofil 5 eingreift.

Auf einer von der Wischlippe 3 abgewandten Fläche der Wischleiste 2 ist die Federschiene 4 angeordnet. Die Federschiene 4 ist zumindest abschnittsweise breiter als die Wischleiste 2. Die Federschiene 4 und die Wischleiste 2 werden von dem Luftleitprofil 5 zusammengehalten. Hierfür weist das Luftleitprofil 5 eine T-Nut auf, deren Innenwandung im Querschnitt die Form des Umrisses des Kopfteils 7 der Wischleiste 2 und der an der Wischleiste 2 anliegenden Federschiene 4 besitzt. Das Luftleitprofil 5 greift in die Nut 8 des Kopfteil 7 der Wischleiste 2 ein und hält damit die drei Elemente des Wischblatts 1 fest zusammen. Vorteilhafterweise wird die Wischleiste 2 lösbar von dem Luftleitprofil 5 gehalten.

Das Hohlprofil 5 weist außerdem auf der von der Wischlippe 3 abgewandten Seite des Wischblatts 1 einen dreieckförmigen Abschnitt auf, dessen Hypotenuse als Anströmkehle 6 ausgebildet ist. Durch diese Anströmkehle 6 wird gewährleistet, daß bei dem an dem Fahrzeug montierten Wischblatt 1, insbesondere bei hohen Geschwindigkeiten des Fahrzeugs, eine Kraft auf das Wischblatt 1 erzeugt wird, die in Richtung der Scheibe wirkt. Ein Abheben des erfindungsgemäßen Wischblatts 1 bei höheren Geschwindigkeiten des Fahrzeugs wird dadurch verhindert.

Das Luftleitprofil 5 erstreckt sich im wesentlichen über die gesamte Länge der Wischleiste 2. Hierdurch wird von einem einzigen einteiligen Luftleitprofil 5 sehr wirkungsvoll auch schon bei niedrigeren Geschwindigkeiten eine Kraft auf das Wischblatt 1 in Richtung der zu wischenden Scheibe erzeugt.

Die Federschiene besteht vorteilhafterweise aus einem federelastischen Werkstoff, wie z. B. Stahl. Das Luftleitprofil und die Wischleiste können beispielsweise aus Gummi oder einem gummielastischen Kunststoff bestehen.

## Patentansprüche

1. Wischblatt (1) für Scheiben von Fahrzeugen mit einer langgestreckten Wischleiste (2), die eine an die Scheibe anlegbare Wischlippe (3) aufweist, einer Federschiene (4) und einem Luftleitprofil (5), das eine schaufelförmige Anströmkehle (6) aufweist, die in von der Wischlippe (3) wegweisenden Richtung angeordnet ist, wobei
das Luftleitprofil (5) die Federschiene (4) und einen von der Wischlippe (3) abgewandten Kopfteil (7) der Wischleiste (2) umschließt, sich das Luftleitprofil (5) im wesentlichen über die Länge der Wischleiste (2) erstreckt und, die Federschiene (4) von dem Luftleitprofil (5) auf einer von der Wischlippe (3) abgewandten Fläche der Wischleiste (2) gehalten ist.

2. Wischblatt (1) gemäß Anspruch 1,
**dadurch gekennzeichnet,**
**daß** die Federschiene (4) einteilig ausgebildet ist.

3. Wischblatt (1) gemäß einem der vorstehenden Ansprüche,
**dadurch gekennzeichnet,**
**daß** der Kopfteil (7) der Wischleiste (2) eine Nut (8) aufweist, in die das Luftleitprofil (5) eingreift.

4. Wischblatt (1) gemäß einem der vorstehenden Ansprüche,
**dadurch gekennzeichnet,**
**daß** das Luftleitprofll (5) die Federleiste (4) und die Wischleiste (2) lösbar hält.

5. Wischblatt (1) gemäß einem der vorstehenden Ansprüche,
**dadurch gekennzeichnet,**
**daß** die Federschiene (4) zumindest abschnittsweise breiter als die Wischleiste (2) ist.

6. Wischblatt (1) gemäß einem der vorstehenden Ansprüche,
**dadurch gekennzeichnet,**
**daß** das Luftleitprofil (5) im Querschnitt eine Nut, in der die Federschiene (4) und das Kopfteil (7) der Wischlippe (3) aufgenommen sind, und daran in von der Wischlippe (3) wegweisenden Richtung anschließend einen dreieckförmigen Abschnitt mit als Anströmkehle (6) ausgebildeter Hypotenuse aufweist.

## Claims

1. Wiper blade (1) for vehicle panes, with an elongated wiper strip (2) which has a wiper lip (3) which can be placed against the pane, a spring rail (4) and an air-guiding profile (5) which has a blade-shaped approach flow channel (6) which is arranged in a direction pointing away from the wiper lip (3), wherein the air-guiding profile (5) surrounds the spring rail (4) and a head part (7) of the wiper strip (2), which head part faces away from the wiper lip (3), and the air-guiding profile (5) extends essentially over the length of the wiper strip (2), and the spring rail (4) is held by the air-guiding profile (5) on a surface of the wiper strip (2), which surface faces away from the wiper lip (3).

2. Wiper blade (1) according to Claim 1, **characterized in that** the spring rail (4) is of single-piece design.

3. Wiper blade (1) according to one of the preceding claims, **characterized in that** the head part (7) of the wiper strip (2) has a groove (8) in which the air-guiding profile (5) engages.

4. Wiper blade (1) according to one of the preceding claims, **characterized in that** the air-guiding profile (5) holds the spring rail (4) and the wiper strip (2) in a releasable manner.

5. Wiper blade (1) according to one of the preceding claims, **characterized in that** the spring rail (4) is wider at least in some sections than the wiper strip (2).

6. Wiper blade (1) according to one of the preceding claims, **characterized in that** the air-guiding profile (5) has, in cross section, a groove in which the spring rail (4) and the head part (7) of the wiper lip (3) are accommodated, and, adjoining said groove in a direction pointing away from the wiper lip (3), a triangular section with a hypotenuse designed as an approach flow channel (6).

## Revendications

1. Balai d'essuie-glace (1) pour vitres de véhicules, comprenant une baguette d'essuie-glace (2) allongée, qui présente une raclette d'essuie-glace (3) pouvant être appliquée contre la vitre, un rail élastique (4) et un profilé de guidage d'air (5) qui présente une cannelure d'afflux (6) en forme de pale, qui est disposée dans la direction opposée à la raclette d'essuie-glace (3), le profilé de guidage d'air (5) entourant le rail élastique (4) et une partie de tête (7) de la baguette d'essuie-glace (2) opposée à la raclette d'essuie-glace (3), le profilé de guidage d'air (5) s'étendant essentiellement sur la longueur de la baguette d'essuie-glace (2) et le rail élastique (4) étant maintenu par le profilé de guidage d'air (5) sur une surface de la baguette d'essuie-glace (2) opposée à la raclette d'essuie-glace (3).

2. Balai d'essuie-glace (1) selon la revendication 1,
**caractérisé en ce que**
le rail élastique (4) est réalisé d'une seule pièce.

3. Balai d'essuie-glace (1) selon l'une quelconque des revendications précédentes,
**caractérisé en ce que**
la partie de tête (7) de la baguette d'essuie-glace (2) présente une rainure (8) dans laquelle s'engage le profilé de guidage d'air (5).

4. Balai d'essuie-glace (1) selon l'une quelconque des revendications précédentes,
**caractérisé en ce que**
le profilé de guidage d'air (5) retient de manière amovible le rail élastique (4) et la baguette d'essuie-glace (2) .

5. Balai d'essuie-glace (1) selon l'une quelconque des revendications précédentes,
**caractérisé en ce que**
le rail élastique (4) est au moins en partie plus large que la baguette d'essuie-glace (2).

6. Balai d'essuie-glace (1) selon l'une quelconque des revendications précédentes,
**caractérisé en ce que**
le profilé de guidage d'air (5) présente, en section transversale, une rainure dans laquelle le rail élastique (4) et la partie de tête (7) de la raclette d'essuie-glace (3) sont reçus, et présente également une portion triangulaire s'y raccordant dans la direction opposée à la raclette d'essuie-glace (3), dont l'hypothénuse constitue la cannelure d'afflux (6).
